Europäisches Patentamt

European Patent Office

Office européen des brevets

(11) Veröffentlichungsnummer : **0 018 475**
**B1**

(12) **EUROPÄISCHE PATENTSCHRIFT**

(45) Veröffentlichungstag der Patentschrift :
16.02.83

(21) Anmeldenummer : **80101052.1**

(22) Anmeldetag : **03.03.80**

(51) Int. Cl.³ : **F 16 J   1/14**

(30) Priorität : **26.04.79 DE 2916847**

(43) Veröffentlichungstag der Anmeldung :
**12.11.80 Patentblatt 80/23**

(45) Bekanntmachung des Hinweises auf die Patenterteilung : **16.02.83 Patentblatt 83/07**

(84) Benannte Vertragsstaaten :
**BE FR GB IT SE**

(56) Entgegenhaltungen :
**Keine**

(73) Patentinhaber : **Messerschmitt-Bölkow-Blohm Gesellschaft mit beschränkter Haftung
Postfach 801109
D-8000 München 80 (DE)**

(72) Erfinder : **Schulz, Ralf-Thilo, Dipl.-Ing.
Ödenstockacher Strasse 2
D-8011 Putzbrunn (DE)**

(54) **Einrichtung aus Kolben und Pleuelstange.**

Jouve, 18, rue St-Denis, 75001 Paris, France

Einrichtung aus Kolben und Pleuelstange

Die Erfindung betrifft eine Einrichtung aus einem Kolben und einer Pleuelstange entsprechend dem Oberbegriff des Anspruchs 1.

Eine derartige, durch die GB-A-1 330 902 bekannte Einrichtung ist als eine Einheit aus im Spritzgußverfahren hergestelltem, mit Graphit verstärktem Nylon gefertigt. Diese Kolben-Pleueleinheit ist insbesondere als Kolbenverdichter mit einer Membrane vorgesehen, bei dem auf das Pleuel keine großen Drücke ausgeübt werden. Für die hohen Drücke, die bei einer Verbrennungskraftmaschine auftreten, dürfte diese bekannte Bauart nicht geeignet sein.

Es ist daher die Aufgabe der Erfindung, eine Einrichtung aus Kolben und Pleuelstange der eingangs genannten Art zu schaffen, deren Pleuelelement auch hohen Drücken gewachsen ist.

Diese Aufgabe wird erfindungsgemäß mit den im kennzeichnenden Teil des Anspruchs 1 angegebenen Merkmalen gelöst. Vorteilhafte Weiterbildungen der Erfindung sind durch die Unteransprüche 2 bis 7 gegeben.

Die Erfindung nutzt die günstigen Werkstoffeigenschaften von faserverstärkten Kunststoffen zur Schaffung eines hochdruckfesten Kolben-Pleuelelementes, welches trotzdem noch einen ausreichend elastischen Gelenkpunkt aufweist. Der im gesamten Pleuelelement umlaufende kunstharzgetränkte Faserstrang mit hoher Druckdehnung überträgt sowohl Druck- als auch Zugkräfte, und das zwischen dem Gelenkpunkt und der Kurbelwellen-Lagerschale angeordnete Druckteil gibt dem Pleuelelement außerdem die erforderliche Steifigkeit zur Aufnahme der beim Kurbelwellenbetrieb auftretenden Biegespannungen. Die erfindungsgemäße Einrichtung erhöht bei Verbrennungs-Kraftmaschinen die Lebensdauer, weil diese durch den Wegfall des Kolbenbolzens und durch Gewichtseinsparung wartungsfreier sind und eine größere Laufruhe aufweisen.

Die Merkmale der Erfindung und deren technischen Vorteile ergeben sich auch aus der nachfolgenden Beschreibung eines Ausführungsbeispiels in Verbindung mit der Zeichnung. Es zeigen :

Figur 1 einen Kolben mit Pleuelelement größtenteils in Schnittdarstellung und

Figur 2 einen Schnitt durch das Pleuelelement entlang den Linien II-II der Fig. 1.

Das Kolben-Pleuelelement besteht aus einem Kolben 2 und einem Pleuelelement 5, die miteinander verbunden sind. Der Kolben 2 hat eine übliche äußere Form und ist innen mit einer schwalbenschwanzförmigen Ausdrehung 3 zur Aufnahme des Pleuelelements 5 versehen. Der Kolben kann in üblicher Metallausführung, z. B. aus Aluminium gefertigt sein. Im Rahmen der vorliegenden Konzeption einer Faserverbundbauweise des gesamten Kolben-Pleuelelementes mit äußerst niedriger Masse wird der Kolben 2 zweckmäßigerweise aus kohlenfaserverstärktem Kohlenstoff in bekannter Wickeltechnik mit nachträglichem Pressen und Fertigdrehen hergestellt. Im Pleuelelement 5 läuft ein Faserstrang 6 herum, der die vom Kolben ausgehenden Druckkräfte auf ein nicht dargestelltes Kurbellager überträgt. Im Oberteil 7 des Pleuelelementes 5 ist der Faserstrang 6 aufgespleißt, wobei die Faserenden zusammen mit Kunstharz in das Innere des Kolbens 2 eingegossen und durch die Ausnehmung 3 im Kolben verzahnt sind. Der in einem Gelenkpunkt 8 vereinigte Faserstrang 6 teilt sich unterhalb des Gelenkpunktes, wobei seine beiden Teile ein Druckteil 10 und eine Lagerschale 11 umfassen. Das Druckteil 10 überträgt die Druckkräfte vom Kolben 2 zusammen mit dem Faserstrang 6 auf die Lagerschale 11 und damit auf die Kurbelwelle. Der Faserstrang 6 überträgt außerdem die auftretenden Zugkräfte und das Druckteil 10 gibt dem Pleuelelement 5 die notwendige Steifigkeit zur Aufnahme der beim Kurbelwellenbetrieb auftretenden Biegespannungen und Zentrifugalkräfte. Zur Aufnahme der am Gelenkpunkt 8 auftretenden Biegespannungen infolge der Auslenkung des Pleuelelementes 5 durch die Kurbelwellendrehung muß für den Faserstrang 6 ein Material mit hoher Bruchdehnung, z. B. E-Glas, gewählt werden.

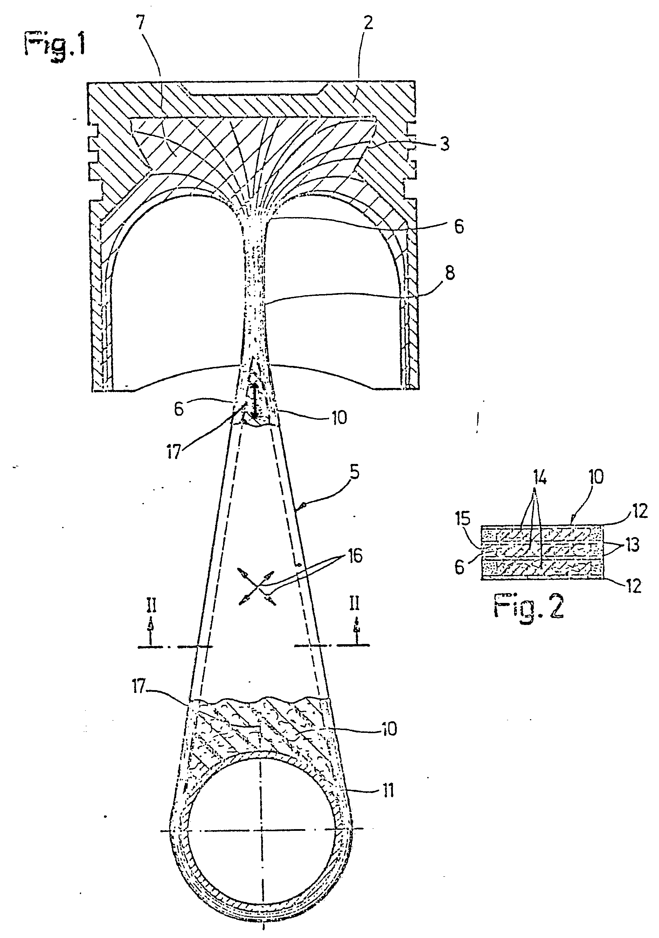

Die Fig. 2 zeigt den Aufbau des Druckteils 10 aus Abdeckungen 12, Nutenstegen 13 und kürzeren Zwischenstegen 14, die alle zweckmäßig aus faserverstärktem Kunststoff gefertigt und miteinander verklebt sind. In seitlich der Zwischenstege 14 zwischen den Abdeckungen 12 und Nutenstegen 13 gebildeten Nuten 15 ist der dort dreigeteilte Faserstrang 6 mit Kunstharz eingegossen. Zur günstigen Aufnahme der Kräfte und Biegespannungen ist der Faserverlauf in den Abdeckungen 12 und Nutenstegen 13 entsprechend den in der Fig. 1 gekreuzten Pfeilen 16 unter etwa 45° zur Längsrichtung der Pleuelstange angeordnet, während die Fasern in den Zwischenstegen 14 entsprechend der Pfeile 17 in Längsrichtung des Pleuelelementes 5 verlaufen.

Die Fasern des Faserstranges 6 und diejenigen des Druckteils 10 sollen zweckmäßig aus gleichem Material bestehen und müssen so aufeinander abgestimmt sein, daß beide Teile gleiche Wärmedehnungskoeffizienten aufweisen. Für die Herstellung aller Teile des Pleuelelementes soll ein hochwarmfestes Harz, z. B. Polyimid, verwendet werden. Nur bei einer möglichen Herabsetzung der Motoröltemperatur ist auch der Einsatz von billigeren nicht hochwarmfesten Harzen, wie z. B. Epoxydharz, möglich.

Der in dem Ausführungsbeispiel dargestellte Aufbau des Kolben-Pleuelelementes kann vielfältig abgewandelt werden. In gleicher oder ähnlicher Weise können alle Kraftmaschinen mit umlaufender Kurbelwelle, auch mit unterschiedlichen Arbeitsprinzipien, z. B. im Zweitakt-

verfahren, eingerichtet werden.

## Ansprüche

1. Einrichtung aus einem Kolben und einer mit diesem unmittelbar verbundenen Pleuelstange für Kraftmaschinen mit umlaufender Kurbelwelle, wobei die Pleuelstange als ein die Auslenkung zwischen Kolben und Kurbelwellenbewegung in einem Gelenkpunkt elastisch aufnehmendes Pleuelelement ausgebildet ist, dadurch gekennzeichnet, daß das Pleuelelement (5) einen kunstharzgetränkten, im gesamten Element umlaufenden Faserstrang (6) und zwischen dem Gelenkpunkt (8) und einer Kurbelwellen-Lagerschale (11) ein Druckteil (10) aus faserverstärktem Kunststoff aufweist.

2. Einrichtung nach Anspruch 1, dadurch gekennzeichnet, daß der Faserstrang (6) aus Fasern mit hoher Bruchdehnung, insbesondere aus E-Glas besteht.

3. Einrichtung nach den Ansprüchen 1 und 2, dadurch gekennzeichnet, daß das Druckteil (10) in seinem Bereich den Faserstrang (6) in Nuten (15) aufnimmt, die durch mit dem Pleuelelement (5) konturgleiche Abdeckungen (12) und Nutenstege (13) sowie durch den Nutengrund bildende Zwischenstege (14) gebildet sind.

4. Einrichtung nach den Ansprüchen 1 bis 3, dadurch gekennzeichnet, daß die Abdeckungen (12) und Nutenstege (13) mit sich unter etwa 90° kreuzenden Fasern, die etwa 45° zur Längsrichtung des Pleuelelementes (5) angeordnet sind, und die Zwischenstege (14) mit parallel zur Längsachse des Pleuelelementes angeordneten Fasern hergestellt sind.

5. Einrichtung nach den Ansprüchen 1 und 2, dadurch gekennzeichnet, daß ein Oberteil (7) des Pleuelelementes (5) in einer schwalbenschwanzförmigen Ausdrehung (3) des Kolbens (2) verankert ist und der aus dem Gelenkpunkt (8) kommende Faserstrang (6) im Oberteil aufgespleißt und verteilt ist.

6. Einrichtung nach Anspruch 1, dadurch gekennzeichnet, daß der Kolben (2) aus Metall besteht.

7. Einrichtung nach Anspruch 1, dadurch gekennzeichnet, daß der Kolben (2) aus kohlefaserverstärktem Kunststoff besteht.

## Claims

1. Device consisting of a piston and a connecting rod directly linked to the latter, for prime movers with rotating crankshaft, with the connecting rod being designed as a connecting rod element flexibly accommodating at a hinge point the deflection between piston and crankshaft movement, characterised by the fact that the connecting rod element (5) displays a layer of fibres (6) soaked in synthetic resin and surrounding the entire element and a pressure section (10) of fibrereinforced plastic between the hinge point (8) and a crankshaft bearing shell (11).

2. Device according to Claim 1 characterised by the fact that the fibre layer (6) consists of fibres with a elongation at rupture, particularly of E-glass.

3. Device according to Claims 1 and 2 characterised by the fact that the pressure section (10) accommodates in its area the fibre layer (6) in grooves (15) formed by coverings (12) and groove webs (13) having the same contour as the connecting rod element (5) as well as by the intermediate webs (14) forming the base of the groove.

4. Device according to Claims 1 to 3 characterised by the fact that the coverings (12) and groove webs (13) produced by fibres crossing at approx. 90° and arranged at approx. 45° to the longitudinal direction of the connecting rod element (5), and the intermediate webs (14) with fibres arranged parallel to the longitudinal axis of the connecting rod element.

5. Device according to Claims 1 and 2 characterised by the fact that the upper section (7) of the connecting rod element (5) is anchored in a swallow tail-shaped recess (3) of the piston (2) and the fibre layer (6) coming out of the hinge point (8) is spliced open in the upper section and spread out.

6. Device according to Claim 1 characterised by the fact that the piston (2) consists of metal.

7. Device according to Claim 1 characterised by the fact that the piston (2) consists of carbon fibre-reinforced plastic.

## Revendications

1. Dispositif formé par un piston et une bielle lui étant directement solidaire, pour les moteurs thermiques comportant un vilebrequin en rotation. La bielle est constituée d'un élément-bielle assurant l'absorption élastique des contraintes dues au piston et à la rotation du vilebrequin, au niveau d'un point d'articulation. Le dispositif ainsi constitué est caractérisé par le fait que l'élément-bielle (5) est constitué sur toute sa longueur d'un faisceau de fibres (6) imprégnées de résine synthétique et présente un élément de pression (10) en matière plastique renforcé par fibres et placé entre le point d'articulation (8) et un coussinet de maneton (11).

2. Dispositif selon la revendication 1, caractérisé par le fait que le faisceau de fibres (6) est composé de fibres présentant une résistance à la rupture élevée, constituées en particulier de verre non alcalin.

3. Dispositif selon les revendications 1 et 2, caractérisé par le fait que le faisceau de fibres (6) est solidaire de l'élément de pression (10) qui comporte des rainures (15) dans lesquelles est inséré le faisceau de fibres. Les rainures sont formées par des membrures formant filets (13), des plaques de recouvrement (12) ayant le même contour que l'élément-bielle (5), ainsi que par des membrures intermédiaires (14) formant le dos de la rainure.

4. Dispositif selon les revendications 1 à 3, caractérisé par le fait que les plaques de recouvrement (12) et les membrures principales (13) sont composées de fibres se croisant à 90° entre elles et positionnées à env. 45° par rapport à l'axe de l'élément-bielle (5) alors que les membrures intermédiaires (14) sont formées de fibres disposées parallèlement à l'axe de l'élément-bielle.

5. Dispositif selon les revendications 1 et 2, caractérisé par le fait que l'élément-bielle (5) présente une partie supérieure (7) qui est fixée dans un embrèvement en queue d'hironde (3) du piston (2), et par le fait que le faisceau de fibres (6) arrivant au point d'articulation (8) est décommis et s'écarte en éventail pour se répartir dans cette partie supérieure.

6. Dispositif selon la revendication 1, caractérisé par le fait que le piston (2) est en métal.

7. Dispositif selon la revendication 1, caractérisé par le fait que le piston (2) est en matière plastique renforcée par fibres de carbone.

Fig.1

Fig.2